# FASCICULE DE BREVET EUROPEEN

(11) **EP 2 154 387 B1**
(45) Date de publication et mention de la délivrance du brevet: **28.08.2019**
(21) Numéro de dépôt: 09166254.4
(22) Date de dépôt: 23.07.2009
(51) Int. Cl.: F16C 32/04, B64G 1/28, G01C 19/24

(54) **Dispositif de centreur à palier magnétique avec deux ensembles de bobinage et d'aimants au stator et sans aimant au rotor**
Zentrierendes Magnetlager mit zwei Spulengruppen und Dauermagneten am Stator und ohne Dauermagneten am Rotor
Centring magnetic bearing with two groups of coils and permanent magnets on the stator and without permanent magnets on the rotor

(30) Priorité: 29.07.2008 FR 0804322
(43) Date de publication de la demande: 17.02.2010
(73) Titulaire: THALES, 92400 Courbevoie (FR)
(72) Inventeur: Chassoulier, Damien, 06370, MOUANS-SARTOUX (FR)
(74) Mandataire: Esselin, Sophie

(56) Documents cités:
- EP-A- 0 284 487
- EP-A- 0 724 086
- EP-B- 0 613 594
- US-A- 4 043 614
- US-A- 4 652 780
- US-A- 4 732 353

## Description

La présente invention concerne une structure de centreur magnétique et, plus particulièrement, une structure de palier magnétique centreur destiné notamment à des applications spatiales.

Plus précisément, la présente invention propose un dispositif de centreur magnétique testable au sol dans toutes les positions, sans consommation d'énergie supplémentaire et de conception simple.

Différentes structures de centreurs magnétiques sont connues. Elles reposent généralement sur l'utilisation d'aimants permanents, de bobinages, d'armatures ferromagnétiques et, le plus souvent, d'un circuit électrique d'excitation permettant de contrôler les flux magnétiques générés par les bobinages. Le rôle d'un palier magnétique centreur est de centrer un corps mobile par rapport à un corps de référence. Plusieurs mouvements du corps mobile par rapport au corps de référence sont ainsi empêchés, ou contrôlés. Si l'on considère un repère orthogonal constitué de trois axes X-X, Y-Y, et Z-Z, centré au centre du dispositif comprenant le centreur magnétique, le corps mobile et le corps de référence ; l'axe Z-Z constituant un axe de révolution du dispositif, et les axes X-X et Y-Y définissant un plan médian du dispositif, il existe alors trois translations selon les axes X-X, Y-Y et Z-Z et trois rotations autour de ces trois mêmes axes.

Différents types de paliers magnétiques centreurs permettent de contrôler les trois translations et les trois rotations, de manière passive et / ou active.

Par ailleurs, le corps mobile conserve au moins un degré de liberté par rapport au corps de référence, généralement une rotation autour de l'axe Z-Z ; dans ce cas, le corps mobile est appelé rotor et le corps de référence stator.

En général, les basculements selon les autres axes sont en revanche contrôlés que de manière passive. Plus précisément, c'est pour minimiser le nombre d'axes actifs, car cela nécessite des commandes électroniques, qu'il est préférable de gérer les basculements de manière passive.

Certains paliers magnétiques centreurs permettent donc de contrôler les trois translations du corps mobile par rapport au corps de référence : selon un axe actif et deux axes passifs, selon deux axes actifs et un axe passif, ou selon trois axes actifs.

Actuellement, pour qu'un centreur magnétique soit testable au sol, sous gravité, dans n'importe quelle position, sans consommation d'énergie supplémentaire en vue de sustenter le rotor, la présence d'aimants est nécessaire. Elle rend en effet possible la sustentation de ce dernier sous gravité sans apport d'énergie supplémentaire. En l'absence de ces aimants, il serait nécessaire que les paliers magnétiques du centreur contrôlent cinq axes actifs, ce qui complexifierait largement l'équipement et son électronique. De plus, la conception d'un sous-ensemble « centreur magnétique - rotor à aimants » est très délicate du fait de contraintes magnétiques, comme la nécessité de na pas mettre de colle sur les pôles des aimants afin de minimiser et de maîtriser les entrefers, et mécaniques, comme la tenue aux contraintes de vibrations et aux contraintes centrifuges.

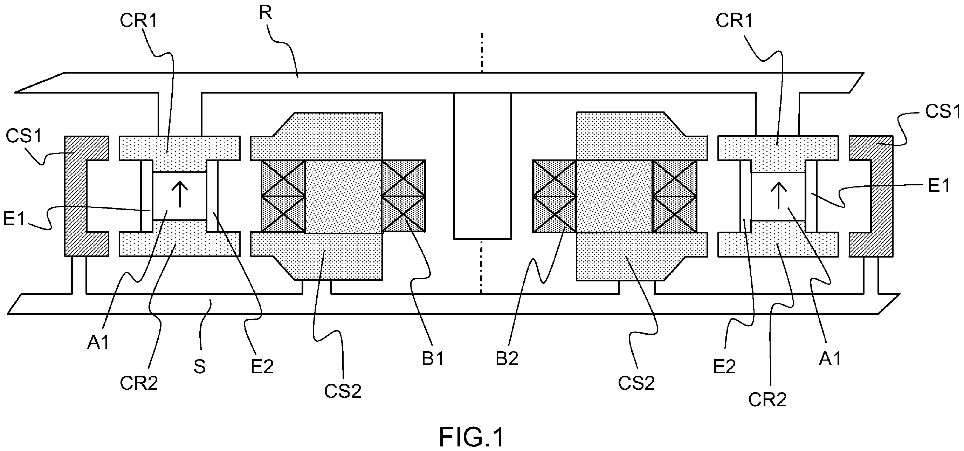

Les solutions actuelles cherchant à proposer des centreurs magnétiques testables dans toutes les positions sous pesanteur se heurtent aux difficultés précitées. Elles comportent soit des aimants au rotor, comme dans l'exemple de la figure 1, soit des aimants au stator mais dans ce cas, elles comprennent aussi un entrefer supplémentaire non fonctionnel, dit entrefer statique. On peut mentionner les brevets européens EP0284 487, EP0724 086 et américain US4043 614. Dans le premier cas, le sous-ensemble au rotor est complexe et contraignant. Il comprend une structure mécanique sur laquelle sont assemblés des aimants. En vue d'assurer la tenue mécanique, en particulier aux contraintes vibratoires, ces équipements nécessitent généralement des couronnes de protection ou des entretoises venant confiner les aimants soumis à la force centrifuge. Par ailleurs, ils comprennent des moyens de fixations tels que des vis ou de la colle. Dans le second cas, les bobinages présentent une efficacité réduite à cause de l'entrefer statique précédemment décrit.

Parmi les technologies connues de l'état de la technique, le dispositif décrit dans le brevet EP0284 487, déjà évoqué ci-dessus, comporte nécessairement, outre les entrefers fonctionnels participant à la génération d'un flux magnétique, des entrefers statiques, non fonctionnels. Le rôle de cet entrefer statique est d'empêcher que l'intégralité du flux magnétique généré par les aimants ne passe dans la bobine, au détriment du rotor.

Cet entrefer statique oblige à sur-dimensionner la bobine, puisqu'il ne participe pas à créer du flux entre le rotor et le stator. Il n'existe que par nécessité physique. Si le flux magnétique généré par les aimants ne passe pas au rotor, le centreur ne fonctionnerait pas. Cependant, plus cet entrefer statique est grand, plus la bobine doit être volumineuse car le flux magnétique de la bobine passe également par cet entrefer.

De la même façon, le dispositif décrit dans le brevet EP0613 594 comporte nécessairement des entrefers statiques, non fonctionnels.

Le brevet US4652 780, quant à lui, décrit un dispositif de centreur magnétique dans lequel le circuit magnétique suivi par le flux magnétique généré par les bobines ne passe pas par le même circuit magnétique que celui des aimants. Ceci implique notamment :
- une masse totale plus importante car le dispositif comprend plusieurs circuits magnétiques, dont un "long" qui contourne l'autre pour se reboucler ;
- des pertes fer plus importantes du fait du circuit magnétique long.

Ces paliers magnétiques à base d'aimants sont par ailleurs difficilement contrôlables, en partie à cause d'un phénomène de retard induit par ces pertes fer.

D'autres technologies encore ont été développées, mais toutes présentent l'inconvénient d'aboutir à des dispositifs de centreurs magnétiques surdimensionnés, c'est-à-dire présentant un encombrement non optimisé.

C'est pour s'affranchir de ces inconvénients que la présente demande de brevet propose un concept de centreur magnétique sans aimant au rotor.

A cet effet, l'invention a pour objet un dispositif de centreur magnétique avec les caractéristiques de la revendication 1.

Dans une mise en oeuvre de l'invention, ledit entrefer présente une dimension inférieure à environ deux millimètres.

Dans une mise en oeuvre préférée de l'invention, chaque entrefer présente une dimension inférieure à environ un millimètre.

Avantageusement, la culasse magnétique du rotor présente deux dentures, permettant d'améliorer l'efficacité du centreur magnétique.

Dans un exemple d'application de l'invention, un actionneur gyroscopique peut comprendre un cardan et une roue, ladite roue comportant un dispositif de centreur magnétique du rotor par rapport au stator selon l'invention.

D'autres caractéristiques et avantages de l'invention apparaîtront à l'aide de la description qui suit faite en regard des dessins annexés qui représentent :
- la figure 1 : le schéma d'un centreur magnétique selon l'état de l'art, conformément à un plan de coupe orthogonal audit centreur ;
- la figure 2 : le schéma d'un centreur magnétique selon l'invention, conformément à un plan de coupe orthogonal audit centreur ;
- la figure 3 : le schéma d'un centreur magnétique selon l'invention, conformément à un plan de coupe parallèle audit centreur.

La figure 1 présente un schéma d'un exemple de centreur magnétique testable dans toutes les positions sous gravité, sans consommation d'énergie supplémentaire, selon l'état de l'art. Le stator S comprend deux culasses magnétiques circulaires CS1 et CS2 et des bobinages B1 et B2. La couronne d'aimants A1 présente au rotor R permet de sustenter le rotor de manière passive, sans apport d'énergie supplémentaire pour compenser la gravité. C'est l'association des bobinages B1, B2, assemblés sur les culasses magnétiques CS1 et CS2 du stator S et des aimants A1 assemblés sur les culasses magnétiques CR1 et CR2 du rotor R qui constitue l'ensemble « palier magnétique centreur ». En l'absence des aimants A1 au rotor R, les paliers magnétiques devraient contrôler cinq axes de manière active, ce qui entraînerait une complexification importante de l'équipement.

La présence des aimants A1 au rotor R nécessite l'utilisation de protections ou d'entretoises E1, E2 qui confinent les aimants A1 soumis à la force centrifuge qui s'applique au rotor R. Ceci est indispensable pour assurer la tenue aux contraintes mécaniques, vibratoires en particulier. En effet, le palier magnétique doit pouvoir supporter deux types de contraintes : les contraintes vibratoires dues au lancement dans l'espace, et les contraintes centrifuge en fonctionnement. Ceci rend la conception de tels dispositifs complexe. Ainsi, à ces entretoises E1, E2 s'ajoutent de nécessaires moyens de fixation, non représentés sur la figure 1, tels que des vis ou de la colle par exemple. En général, la robustesse, et en particulier la tenue aux tests vibratoires, est très difficile à assurer et rend complexe la mise au point du sous-ensemble au rotor R. Ce type de solution, permettant de produire des centreurs magnétiques testables sous gravité dans toutes les positions sans apport d'énergie supplémentaire entraîne des contraintes et une complexification du centreur magnétique.

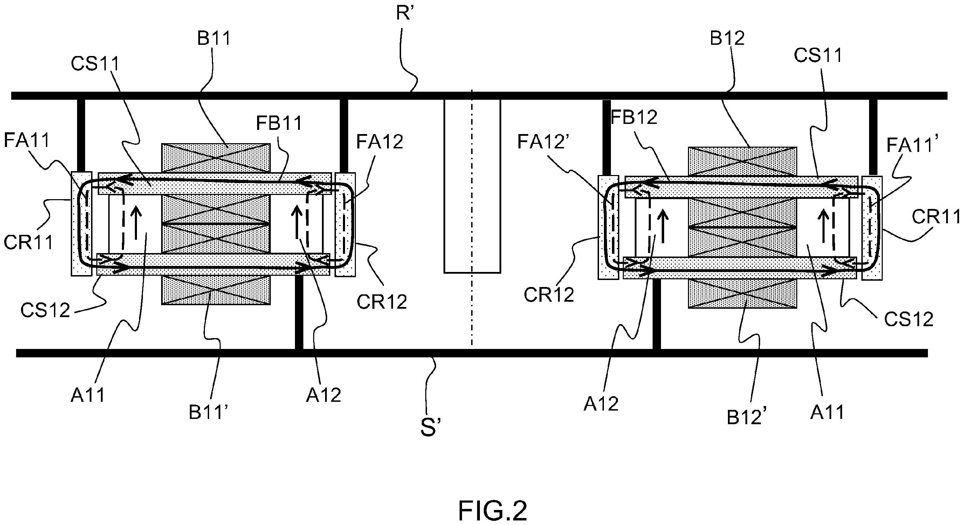

La figure 2 représente une vue en coupe, selon un plan orthogonal à sa base circulaire, d'un centreur magnétique selon l'invention. Il faut noter qu'une coupe selon un plan orthogonal au plan de coupe utilisé donnerait le même résultat. Le rotor R' est ici réduit à une couronne d'acier comportant des culasses magnétiques CR11 et CR12. Il ne comprend aucun aimant. C'est le stator S' qui supporte à la fois l'ensemble de bobinages B11, B11', B12, B12' et les couronnes d'aimants A11, A12. Le positionnement des aimants A11, A12 au stator S' permet de supprimer de facto les contraintes mécaniques liées à l'effet centrifuge pour lesdits aimants A11, A12. Les flux magnétiques, FB11 et FB12 créés par les bobinages B11, B11', B12, B12', et FA11, FA12, FA11', FA12' créés par les aimants A11, A12, traversent les entrefers séparant les culasses magnétiques CR11 et CR12 du rotor R' des culasses magnétiques CS11 et CS12 du stator S'. Ils permettant au dispositif d'assurer la fonction de centreur magnétique. Un courant de bobinage peut être appliqué aux bobinages B11, B11', B12, B12', permettant de contrôler le centrage relatif du rotor R' et du stator S'. Ce courant de bobinage génère une force qui vient déséquilibrer les champs magnétiques FA11, FA12, FA11', FA12' dans les entrefers.

En position «rotor centré », les flux magnétiques FA11, FA12, FA11', FA12' générés par les aimants dans les entrefers permettent de sustenter le rotor R' de manière passive selon l'axe de rotation du rotor R' et de manière active autour du point d'équilibre selon les deux autres axes, le contrôle étant possible grâce à la maîtrise des flux magnétiques FB11, FB12.

Il faut noter que dans le dispositif selon l'invention, l'entrefer est faible, c'est-à-dire inférieur à 2 millimètres, voire inférieur à 1 millimètre. Surtout, l'ensemble des bobinages B11, B11', B12, B12' est fonctionnel. Tous participent à la création des flux magnétiques FB11, FB12. De ce fait, les bobinages B11, B11', B12, B12' peuvent être de dimensions réduites et l'encombrement de l'ensemble du dispositif est limité.

De plus, cet architecture permet de réduire l'encombrement global pour une autre raison : comme le montre la figure 2, les flux magnétiques FB11, FB12 créés par les bobinages B11, B11', B12, B12' empruntent localement les mêmes circuits magnétiques que ceux utilisés par les flux magnétiques FA11, FA11', FA12, FA12' générés par les aimants A11, A12. On évite ainsi la formation de deux circuits magnétiques distincts dont l'un contourne l'autre, ce qui permet de réduire significativement l'encombrement par rapport aux dispositifs de l'état de la technique.

Par ailleurs, si la figure 2 représente des culasses magnétiques CR11 et CR12 au rotor R' n'ayant pas de denture, ceci n'est pas limitatif. En effet, Ces culasses CR11, CR12 peuvent typiquement comporter deux dentures, ce qui améliore l'efficacité du centreur magnétique en facilitant l'obtention d'un flux magnétique orthogonal auxdites dentures.

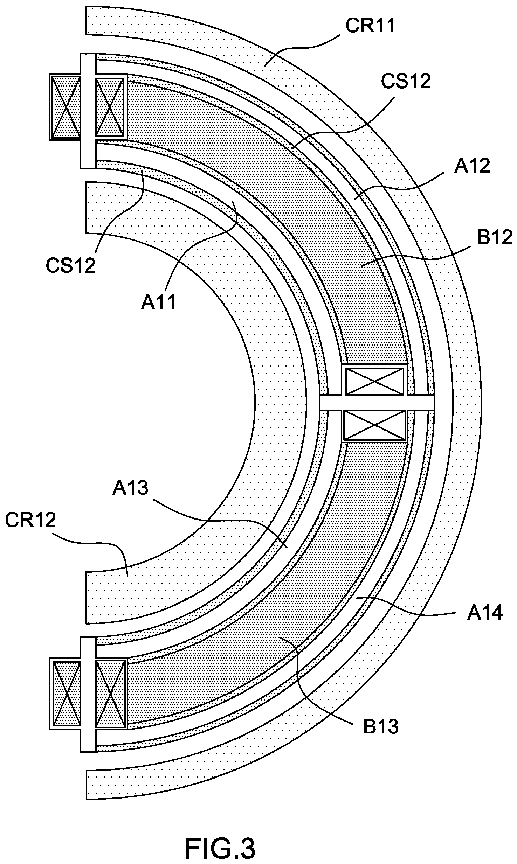

La figure 3 apporte un autre point de vue sur le centreur magnétique selon l'invention avec une demie vue de dessus selon un plan de coupe parallèle à la base circulaire du centreur situé juste sous la partie supérieure de la culasse magnétique CS11. On visualise bien les culasses magnétiques CR11, CR12 du rotor R', avec au milieu les bobinages B12, B13 et les aimants A11, A12, A13, A14 assemblés entre les culasses magnétiques CS11 et CS12 du stator S'.

En résumé, l'invention a pour principal avantage de proposer un concept de centreur magnétique sans aimant au rotor, le rotor se réduisant à une couronne comportant des culasses magnétiques, permettant de disposer d'un équipement testable au sol, sous gravité, dans toutes les positions, sans apport d'énergie supplémentaire, et sans augmentation de la complexité dudit dispositif. Coût, encombrement et simplicité de conception s'en trouvent optimisés.

## Revendications

1. Dispositif de centreur magnétique comportant :
• un corps mobile, appelé rotor (R'), comportant une couronne d'acier comprenant une structure mécanique et au moins deux culasses magnétiques (CR11, CR12), et ne comprenant aucun aimant,
• un corps de référence, appelé stator (S'), comprenant une structure mécanique, et au moins deux culasses magnétiques (CS11, CS12) disposées entre les deux culasses du rotor,
- deux couronnes d'aimants (A11, A12) et deux ensembles de bobinages (B11, B11', B12, B12') pouvant être alimenté par un courant de bobinage étant assemblés au stator, les deux ensembles de bobinage étant disposés sur les deux culasses magnétiques du stator entre les deux couronnes d'aimants,
- au moins quatre entrefers séparant lesdites culasses magnétiques (CR11, CR12) du rotor (R') et lesdites culasses magnétiques (CS11, CS12) du stator (S'),
- des flux magnétiques (FB11, FB12) générés par lesdits bobinages et des flux magnétiques (FA11, FA12, FA11', FA12') générés par les dits aimants traversant des entrefers séparant lesdites culasses magnétiques (CR11, CR12) du rotor (R') et lesdites culasses magnétiques (CS11, CS12) du stator (S').

2. Dispositif selon la revendication 1, **caractérisé en ce que** lesdits entrefers présentent une dimension inférieure à environ deux millimètres.

3. Dispositif selon l'une quelconque des revendications 1 à 2, **caractérisé en ce que** lesdits entrefers présentent une dimension inférieure à environ un millimètre.

4. Dispositif selon l'une quelconque des revendications précédentes, **caractérisé en ce que** les culasses magnétiques (CR11, CR12) du rotor (R') présente deux dentures, permettant d'améliorer l'efficacité dudit centreur magnétique.

5. Actionneur gyroscopique comprenant un cardan et une roue, **caractérisé en ce que** ladite roue comprend un dispositif de centreur magnétique du rotor par rapport au stator selon l'une quelconque des revendications précédentes.

## Patentansprüche

1. Magnetische Zentriervorrichtung, die Folgendes umfasst:
• einen beweglichen Körper, Rotor (R') genannt, der eine Stahlkrone umfasst, die eine mechanische Struktur und wenigstens zwei Magnetjochs (CR11, CR12) umfasst und keinen Magnet umfasst,
• einen Referenzkörper, Stator (S') genannt, der eine mechanische Struktur und wenigstens zwei Magnetjochs (CS11, CS12) umfasst, die zwischen den zwei Jochs des Rotors angeordnet sind,
- wobei zwei Magnetkronen (A11, A12) und zwei Wicklungsbaugruppen (B11, B11', B12, B12'), die durch einen Wicklungsstrom gespeist werden können, am Stator montiert sind, wobei die beiden Wicklungsbaugruppen auf den zwei Magnetjochs des Stators zwischen den beiden Magnetkronen angeordnet sind,
- wobei wenigstens vier Spalte die Magnetjochs (CR11, CR12) des Rotors (R') und die Magnetjochs (CS11, CS12) des Stators (S') voneinander trennen,
- wobei durch die Wicklungen erzeugte Magnetflüsse (FB11, FB12) und durch die Magnete erzeugte Magnetflüsse (FA11, FA12, FA11', FA12') die Spalte überqueren, die die Magnetjochs (CR11, CR12) des Rotors (R') und die Magnetjochs (CS11, CS12) des Stators (S') trennen.

2. Vorrichtung nach Anspruch 1, **dadurch gekennzeichnet, dass** die Spalte ein Maß von weniger als etwa zwei Millimetern aufweisen.

3. Vorrichtung nach einem der Ansprüche 1 bis 2, **dadurch gekennzeichnet, dass** die Spalte ein Maß von wenigstens etwa einem Millimeter aufweisen.

4. Vorrichtung nach einem der vorherigen Ansprüche, **dadurch gekennzeichnet, dass** die Magnetjochs (CR11, CR12) des Rotors (R') zwei Zahnungen aufweisen, die es zulassen, die Wirksamkeit des magnetischen Zentrierers zu verbessern.

5. Gyroskopisches Stellglied, das eine Gelenkwelle und ein Rad umfasst, **dadurch gekennzeichnet, dass** das Rad eine magnetische Zentriervorrichtung des Rotors mit Bezug auf den Stator nach einem der vorherigen Ansprüche umfasst.

## Claims

1. Magnetic centre-finding device comprising:
• a moving body, called rotor (R'), including a steel crown, comprising a mechanical structure and at least two magnetic yokes (CR11, CR12), and comprising no magnet,
• a reference body, called stator (S'), comprising a mechanical structure and at least two magnetic yokes (CS11, CS12), arranged between the two yokes of the rotor,
- two crowns of magnets (A11, A12), and two sets of windings (B11, B11', B12, B12') that can be powered by a winding current being assembled on the stator (S), the two sets of windings being arranged on the two magnetic yokes of the stator between the two crowns of magnets,
- at least four air gaps separating said magnetic yokes (CR11, CR12) of the rotor (R') and said magnetic yokes (CS11, CS12) of the stator (S'),
- magnetic fluxes (FB11, FB12) created by said windings and magnetic fluxes (FA11, FA12, FA11', FA12') created by said magnets, passing through the air gaps separating said magnetic yokes (CR11, CR12) of the rotor (R') and said magnetic said magnetic yokes (CS11, CS12) of the stator (S').

2. Device according to Claim 1, **characterized in that** said air gaps have a dimension less than approximately two millimetres.

3. Device according to any one of Claims 1 to 2, **characterized in that** said air gaps have a dimension less than approximately one millimetre.

4. Device according to any one of the preceding claims, **characterized in that** the magnetic yokes (CR11, CR12) of the rotor (R') have two sets of teeth, making it possible to improve the efficiency of said magnetic centre-finder.

5. Gyroscopic actuator comprising a universal joint and a wheel, **characterized in that** said wheel comprises a magnetic centre-finding device of the rotor relative to the stator according to any one of the preceding claims.
